# EUROPEAN PATENT APPLICATION

(11) **EP 4 438 207 A1**
(43) Date of publication of application: **02.10.2024**
(21) Application number: 22898383.9
(22) Date of filing: 08.11.2022
(51) Int. Cl.: B23B 29/24, B23B 7/12, B23B 9/08

(54) **TOOL HOLDER AND TOOL REST FOR MACHINE TOOL**

(30) Priority: 26.11.2021 JP 2021191653
(71) Applicant: Star Micronics Co., Ltd., Shizuoka-shi, Shizuoka 422-8654 (JP)
(72) Inventor: KAWARASAKI, Tetsu, Shizuoka-shi, Shizuoka 422-8654 (JP)
(74) Representative: Grünecker Patent- und Rechtsanwälte PartG mbB
(86) International application number: PCT/JP2022/041465
(87) International publication number: WO 2023/095599

(57) **Abstract**

In order to improve the machining freedom of a workpiece while suppressing a cost increase, a tool rest (3) for a machine tool includes a cutting tool holder 31 having a plurality of parallel cutting tool fixing grooves 33 to which a shank 41 of a cutting tool 40 can be fixed, and a tool holder 5 that holds a tool 60 for machining a workpiece W1 gripped by a spindle 11 that is capable of rotating about a spindle axis AX0. The tool holder 5 includes a shaft part 50 that is fixed to the cutting tool fixing groove 33, and a holding part 54. The holding part 54 holds, as the tool 60 that performs machining about a machining axis AX4, at least one of a rotary tool and a non-rotary tool in which the machining axis AX4 extends along the spindle axis AX0.

## Description

### [Technical Field]

The present invention relates to a tool holder for holding a tool that machines a workpiece gripped by a spindle, and a tool rest for a machine tool.

### [Background Art]

A numerical control (NC) lathe including a gang-type tool rest to which a plurality of cutting tools for cutting a workpiece gripped by a spindle that is capable of rotating about a spindle axis are attached in parallel is known as a machine tool. The aforesaid gang-type tool rest includes a tool rest main body, and a cutting tool holder having a plurality of parallel cutting tool fixing grooves to which shanks of the cutting tools can be fixed. The orientation of a center line of each cutting tool fixing groove is orthogonal to the spindle axis, for example an orientation extending along an X-axis. The plurality of cutting tool fixing grooves are arranged in an orientation that is orthogonal to the spindle axis and the center axes of the cutting tool fixing grooves, for example an orientation extending along a Y-axis.
PTL 1 discloses an NC lathe having a gang-type tool rest of the type described above.

### [Citation List]

### [Patent Literature]

[PTL 1] Japanese Patent Application Publication No. 2008-9758

### [Summary of Invention]

### [Technical Problem]

When a rotary tool, a drilling tool, or a tap is used to machine the workpiece gripped by the spindle, the rotary tool or the like may be attached to a sleeve holder or a swiveling unit that is attached to the tool rest main body separately from the cutting tool holder. However, attaching the sleeve holder or the swiveling unit to the tool rest main body leads to an increase in the size of the tool rest and also an increase in the cost of the tool rest.
Note that this problem is not limited to a lathe and exists in various machine tools, such as machining centers.

The present invention discloses technology with which the machining freedom of a workpiece is improved while suppressing a cost increase.

### [Solution to Problem]

A tool holder according to the present invention includes an aspect in which the tool holder is used in a machine tool including a cutting tool holder having a plurality of parallel cutting tool fixing grooves to which a shank of a cutting tool can be fixed, and holds a tool for machining a workpiece gripped by a spindle that is capable of rotating about a spindle axis, the tool holder including:
a shaft part that is fixed to the cutting tool fixing groove; and
a holding part that holds, as the tool that performs machining centering on a machining axis, at least one of a rotary tool and a non-rotary tool in which the machining axis extends along the spindle axis.

Further, a tool rest for a machine tool according to the present invention includes an aspect in which the tool rest includes:
a cutting tool holder having a plurality of parallel cutting tool fixing grooves to which a shank of a cutting tool can be fixed; and
a tool holder that holds a tool for machining a workpiece gripped by a spindle that is capable of rotating about a spindle axis,
the tool holder including:
   a shaft part that is fixed to the cutting tool fixing groove; and
   a holding part that holds, as the tool that performs machining centering on a machining axis, at least one of a rotary tool and a non-rotary tool in which the machining axis extends along the spindle axis.

### [Advantageous Effects of Invention]

According to the present invention, it is possible to provide technology with which the machining freedom of a workpiece is improved while suppressing a cost increase.

### [Brief Description of Drawings]

[Fig. 1] Fig. 1 is a schematic front view showing an example configuration of a machine tool.
[Fig. 2] Fig. 2 is a schematic right-side view showing main parts of a tool rest for a machine tool.
[Fig. 3] Fig. 3 is a schematic right-side view showing an example in which a tool holder is attached to a cutting tool holder.
[Fig. 4] Fig. 4 is a schematic back view showing main parts of the tool rest for a machine tool.
[Fig. 5] Fig. 5 is a schematic plan view showing main parts of the machine tool.

### [Description of Embodiments]

An embodiment of the present invention will be described below. Needless to mention, the following embodiment merely illustrates an example of the present invention, and not all of the features illustrated by the embodiment are essential to solving the problem of the invention.

### (1) Outline of technology included in the present invention

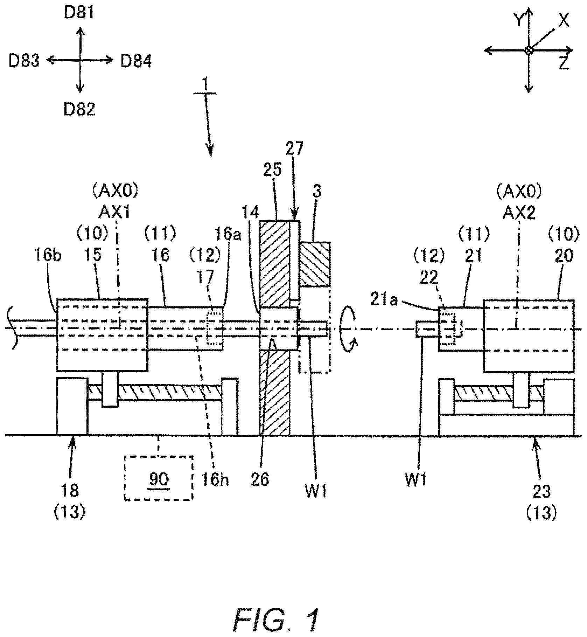

First, referring to an example shown in Figs. 1 to 5, an outline of the technology included in the present invention will be described. Note that since the figures of the present application are schematic diagrams illustrating examples, the magnifications of the directions shown in the figures may be different, and the figures may not be consistent. Needless to mention, the elements of the present technology are not limited to the specific examples denoted by reference symbols.

### [Aspect 1]

A tool holder 5 according to an aspect of the present technology is used in a machine tool (a lathe 1, for example) that includes a cutting tool holder 31 having a plurality of parallel cutting tool fixing grooves 33 to which a shank 41 of a cutting tool 40 can be fixed, and holds a tool 60 for machining a workpiece W1 gripped by a spindle 11 that is capable of rotating about a spindle axis AX0. The tool holder 5 includes a shaft part 50 that is fixed to the cutting tool fixing groove 33, and a holding part 54. The holding part 54 holds, as the tool 60 that performs machining about a machining axis AX4, at least one of a rotary tool and a non-rotary tool in which the machining axis AX4 extends along the spindle axis AX0.

When the tool holder 5 described above is used in the machine tool (1), the workpiece W1 can be machined by the tool 60 (at least one of the rotary tool and the non-rotary tool in which the machining axis AX4 extends along the spindle axis AX0) held by the tool holder 5 that is fixed to the cutting tool holder 31 in addition to the cutting tool 40 fixed to the cutting tool holder 31. Hence, with aspect 1 described above, it is possible to provide a tool holder with which the machining freedom of the workpiece is improved while suppressing a cost increase.

Here, the workpiece gripped by the spindle may be held by a guide bush.

The tool includes a component known as a tool unit that can easily by attached to and detached from a holder.

The rotary tool refers to a tool that self-rotates about the machining axis using a power source. The rotary tool includes a rotary drill, an endmill, a polygon cutter, and so on.

The non-rotary tool having the machining axis that extends along the spindle axis includes a drill, a reamer, a tap, and so on.

The machining axis refers to the rotation center of the rotary tool when the tool is a rotary tool, and refers to the rotation center of the machining performed by rotating the workpiece about the spindle axis when the tool is a non-rotary tool. The machining axis of the non-rotary tool may be aligned with the spindle axis but does not have to be aligned with the spindle axis.

The above statements also apply to the following aspects.

### [Aspect 2]

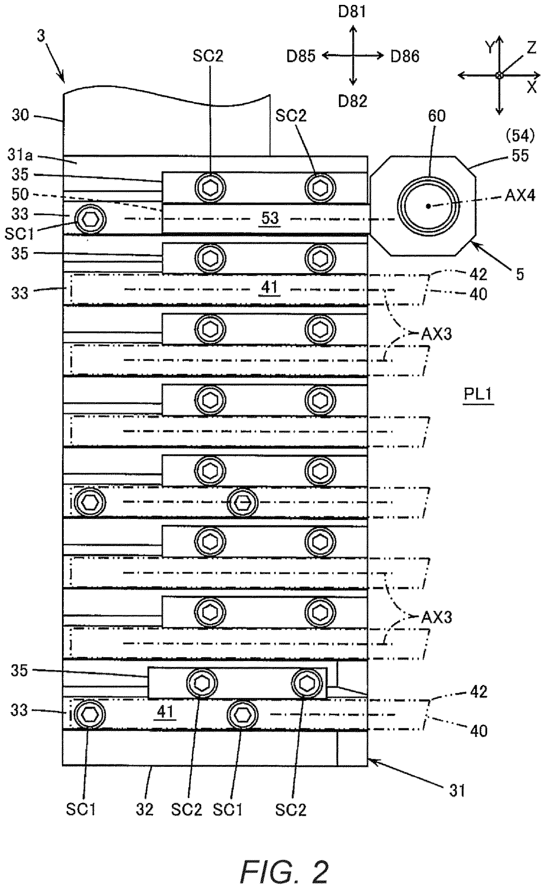

As shown in the example of Figs. 2 to 5, the holding part 54 may hold the tool 60 such that the machining axis AX4 has a different orientation to the orientation of the cutting tool fixing groove 33 (for example, the orientation of a center line AX3). Thus, machining centering on the machining axis AX4 having a different orientation to the orientation of the cutting tool fixing groove 33 can be performed on the workpiece W1. With this aspect, therefore, the machining freedom of the workpiece can be further improved.

### [Aspect 3]

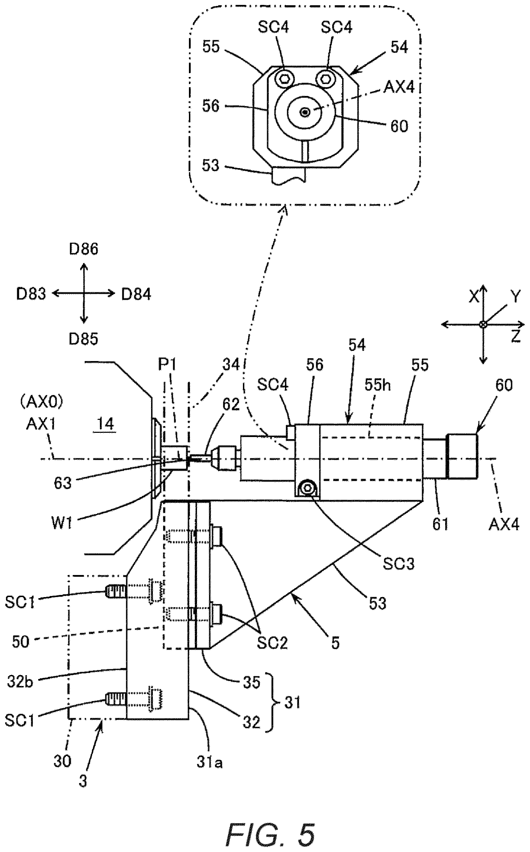

As shown in the example of Fig. 5, the tool holder 5 may further include a connection part 53 that is connected to the holding part 54 from the shaft part 50 and positions the holding part 54 further away from the workpiece W1 prior to machining, which is gripped by the spindle 11, than an intersecting position P1 that overlaps an extension part 34 of the cutting tool fixing groove 33 on the machining axis AX4. The holding part 54 may hold the tool 60 such that a tip end 63 of the tool 60 is closer than the holding part 54 to the workpiece W1 prior to machining, which is gripped by the spindle 11.

By positioning the holding part 54 further away from the workpiece W1 prior to machining than the intersecting position P1 and positioning the tip end 63 of the tool 60 closer to the workpiece W1 prior to machining than the holding part 54, a moment acting on the tip end 63 of the tool 60 from the shaft part 50 fixed to the cutting tool fixing groove 33 can be reduced. As a result, with aspect 3, it is possible to provide a favorable example in which the workpiece is machined accurately.

### [Aspect 4]

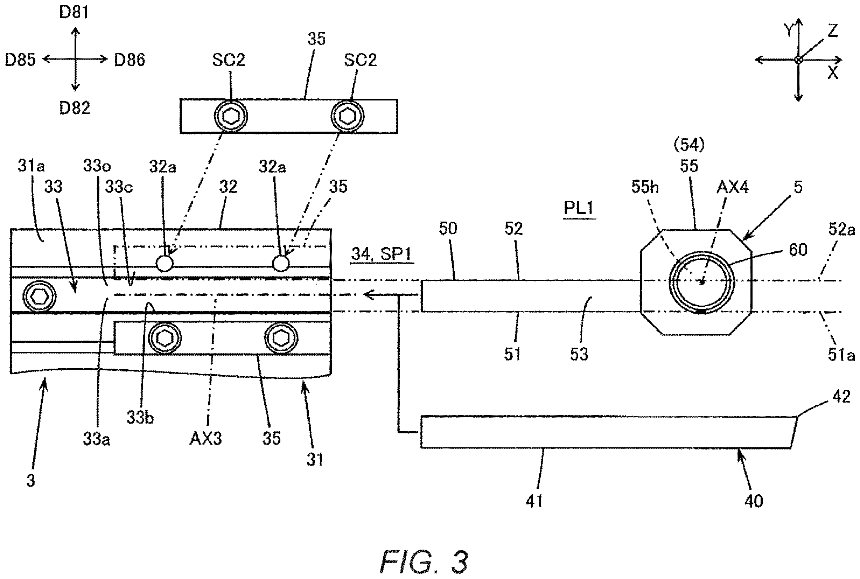

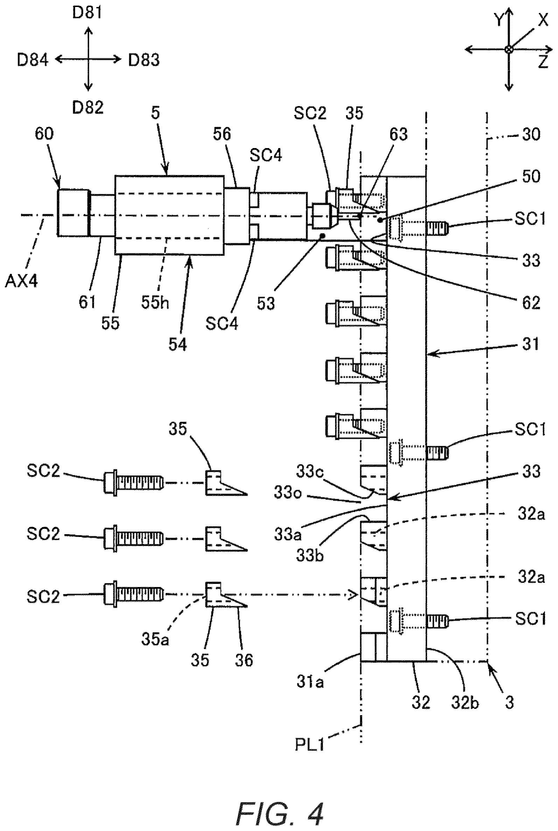

The orientation of the machining axis AX4 may be orthogonal to a placement surface 31a of the cutting tool holder 31, in which the plurality of cutting tool fixing grooves 33 are provided. As shown in the example of Figs. 3 and 4, the cutting tool fixing groove 33 may include a bottom surface 33a that is narrower than an opening 33o on a lateral section of the cutting tool fixing groove 33, a first inside surface 33b that contacts the shaft part 50, and a second inside surface 33c on the opposite side to the first inside surface 33b. The cutting tool holder 31 may include a cutting tool holder main body 32 that includes the plurality of cutting tool fixing grooves 33, and a clamp piece 35 that fixes the shaft part 50 to the cutting tool fixing groove 33 by being attached to the cutting tool holder main body 32 in a state where a part thereof (a wedge 36, for example) is inserted between the second inside surface 33c and the shaft part 50. The shaft part 50 may include a first outside surface 51 that contacts the first inside surface 33b, and a second outside surface 52 on the opposite side to the first outside surface 51. When the tool holder 5 attached to the cutting tool fixing groove 33 is projected onto a virtual plane PL1 extending along the placement surface 31a, the machining axis AX4 may be positioned closer to an extension line 52a of the second outside surface 52 than an extension line 51a of the first outside surface 51.

Thus, on the virtual plane PL1, a space SP1 that forms the extension part 34 of the clamp piece 35 is used effectively. As a result, with aspect 4, it is possible to provide a favorable example of fixing the tool holder to the cutting tool fixing groove.

Here, the terms "first", "second", and so on in the present application are used to distinguish between respective constituent elements included in a plurality of constituent elements having similarities, and do not refer to a sequence. This statement also applies to the following aspect.

### [Aspect 5]

Furthermore, a tool rest (a tool rest 3, for example) for a machine tool according to an aspect of the present technology includes the cutting tool holder 31 having the plurality of parallel cutting tool fixing grooves 33 to which the shank 41 of the cutting tool 40 can be fixed, and the tool holder 5 that holds the tool 60 for machining the workpiece W1 gripped by the spindle 11 that is capable of rotating about the spindle axis AX0. The tool holder 5 includes the shaft part 50 that is fixed to the cutting tool fixing groove 33, and the holding part 54. The holding part 54 holds, as the tool 60 that performs machining about the machining axis AX4, at least one of a rotary tool and a non-rotary tool in which the machining axis AX4 extends along the spindle axis AX0.

When the tool rest (3) for a machine tool is used in the machine tool (1), the workpiece W1 can be machined by the tool 60 (at least one of the rotary tool and the non-rotary tool in which the machining axis AX4 extends along the spindle axis AX0) held by the tool holder 5 that is fixed to the cutting tool holder 31 in addition to the cutting tool 40 fixed to the cutting tool holder 31. Hence, with aspect 5, it is possible to provide a tool rest for a machine tool with which the machining freedom of the workpiece is improved while suppressing a cost increase.

### (2) Specific example of configuration of machine tool

Fig. 1 is a schematic front view showing a configuration of the lathe 1 as an example of a machine tool. In Fig. 1, the position of the tool rest 3, which exists in front of the workpiece W1, is indicated by a dot-dot-dash line. Fig. 2 is a schematic right-side view showing main parts of the tool rest 3 as an example of a tool rest for a machine tool. In Fig. 2, the positions of the cutting tools 40 attached to the cutting tool holder 31 are indicated by dot-dot-dash lines.

Fig. 3 is a schematic right-side view showing the manner in which the tool holder 5 is attached to the cutting tool holder 31. In Fig. 3, the attachment position of the clamp piece 35 and the extension lines 51a and 52a are indicated by dot-dot-dash lines. Fig. 4 is a schematic back view showing main parts of the tool rest 3. Fig. 5 is a schematic plan view showing main parts of the lathe 1. The upper part of Fig. 5 is a diagram showing the holding part 54 of the tool holder 5 from the left. In Figs. 4 and 5, the position of the tool rest main body 30 is indicated by dot-dot-dash lines.

In Figs. 1 to 5, a symbol D81 denotes an upward direction, a symbol D82 denotes a downward direction, a symbol D83 denotes a leftward direction, a symbol D84 denotes a rightward direction, a symbol D85 denotes a frontward direction, and a symbol D86 denotes a rearward direction. Note that these directions are based on the direction in which the lathe 1 shown in Fig. 1 is viewed. Control axes of the lathe 1 include an X-axis, indicated by "X", a Y-axis, indicated by "Y", and a Z-axis, indicated by "Z". A Z-axis direction is a horizontal direction extending along the spindle axis AX0 that serves as the rotation center of the workpiece W1. An X-axis direction is a horizontal direction orthogonal to the Z-axis. A Y-axis direction is a vertical direction orthogonal to the Z-axis. Note that as long as the Z-axis and the X-axis intersect, these two axes need not be orthogonal, as long as the Z-axis and Y-axis intersect, these two axes need not be orthogonal, and as long as the X-axis and the Y-axis intersect, these two axes need not be orthogonal. Furthermore, the figures referred to in the present specification merely illustrate examples used to describe the present technology, and the present technology is not limited thereby. Descriptions of positional relationships between respective parts are merely examples. Accordingly, the present technology also includes examples in which left and right are reversed, the rotation direction is reversed, and so on. Equality of directions, positions, and so on is not limited to strict coincidence and includes deviation from strict coincidence due to errors.

The lathe 1 shown in Fig. 1 is an NC lathe including a headstock 10 provided with the spindle 11, which includes a gripping unit 12, a headstock driving unit 13, a supporting bed 25 having an attachment hole 26 for the guide bush 14, the tool rest 3, a tool rest driving unit 27, an NC apparatus 90, and so on. The NC apparatus 90 controls machining of the workpiece W1 by interpreting and executing a machining program created by an operator. Here, the headstock 10 collectively refers to a front headstock 15 and a back headstock 20, which is also known as an opposite headstock. The front headstock 15 incorporates a front spindle 16 having a gripping unit 17 such as a collet. The back headstock 20 incorporates a back spindle 21 having a gripping unit 22 such as a collet. The spindle 11 collectively refers to the front spindle 16 and the back spindle 21, which is also known as an opposite spindle. The gripping unit 12 collectively refers to the gripping unit 17 and the gripping unit 22. The headstock driving unit 13 collectively refers to a front headstock driving unit 18 for moving the front headstock 15 along the Z-axis, and a back headstock driving unit 23 for moving the back headstock 20 along at least the Z-axis. The lathe 1 shown in Fig. 1 is a spindle-moving lathe in which the front spindle 16 moves in the Z-axis direction.

The front spindle 16 is capable of gripping the bar-shaped workpiece W1, which is inserted therein from the rear by a bar feeder, not shown in the figures, releasably using the gripping unit 17, and is capable of rotating about a spindle axis AX1 together with the workpiece W1. A front end 16a of the front spindle 16 opposes the back spindle 21, and a rear end 16b of the front spindle 16 opposes the bar feeder. The front spindle 16 includes a through hole 16h that penetrates along the spindle axis AX1. The workpiece W1 is inserted into the through hole 16h from the rear. Note that when the workpiece W1 prior to machining is a short material, the workpiece W1 may be supplied to the gripping unit 17 from the front end 16a of the front spindle 16. The NC apparatus 90 controls the rotation of the front spindle 16 about the spindle axis AX1 and the gripping status of the gripping unit 17. The gripping unit 17 can be constituted by a collet or the like, for example. The front headstock driving unit 18 moves the front headstock 15 in the Z-axis direction in response to a command from the NC apparatus 90. Accordingly, the workpiece W1 gripped by the front spindle 16 moves in the Z-axis direction. Note that the bar-shaped workpiece W1 is not limited to a solid material such as an elongated columnar material, and may also be a hollow material such as an elongated cylindrical material.

A front end 21a of the back spindle 21 opposes the front end 16a of the front spindle 16. The back spindle 21 is capable of gripping the workpiece W1 undergoing machining, which projects frontward from the front end 16a of the front spindle 16, releasably using the gripping unit 22, and is capable of rotating about a spindle axis AX2 together with the workpiece W1. The NC apparatus 90 controls the rotation of the back spindle 21 about the spindle axis AX2 and the gripping status of the gripping unit 22. The gripping unit 22 can be constituted by a collet or the like, for example. The back headstock driving unit 23 moves the back headstock 20 in the Z-axis direction and also in the X-axis direction or the Y-axis direction in response to a command from the NC apparatus 90. When workpiece W1 is gripped by both the front spindle 16 and the back spindle 21, the spindle axis AX2 is aligned with the spindle axis AX1. Here, the spindle axis AX0 collectively refers to the spindle axis AX1 and the spindle axis AX2. Note that the front of the front spindle 16 refers to the direction in which the workpiece W1 is pushed out from the front spindle 16, and in the example shown in Fig. 1 is the rightward direction D84. The front of the back spindle 21 refers to the direction in which the back spindle 21 moves toward the front spindle 16, and in the example shown in Fig. 1 is the leftward direction D83.

The supporting bed 25 includes the attachment hole 26, which is located between the front headstock 15 and the back headstock 20 in the Z-axis direction and penetrates in the Z-axis direction. When a guide bush such as that shown in Fig. 1 is used, the guide bush 14 is inserted into the attachment hole 26 and thereby detachably attached to the supporting bed 25. The guide bush 14 supports the workpiece W1 projecting frontward from the through hole 16h of the front spindle 16 so as to be capable of sliding in the Z-axis direction. The part of the workpiece W1 that projects toward the back spindle 21 (in the rightward direction D84) from the guide bush 14 is machined by a tool, for example the cutting tool 40 or the tool 60 shown in Fig. 2. When a guide bush is not used, the front part of the front spindle 16 is inserted into the attachment hole 26. The part of the workpiece W 1 that projects frontward (in the rightward direction D84) from the front spindle 16 is machined by the tool.

### (3) Specific example of tool rest for machine tool

As shown in Figs. 2, 4, and 5, the tool rest 3 includes the tool rest main body 30, the cutting tool holder 31, and the tool holder 5. The tool rest main body 30 is moved in the X-axis direction and the Y-axis direction by the tool rest driving unit 27 shown in Fig. 1. The tool rest driving unit 27 includes an X-axis driving unit for moving the tool rest 3 along the X-axis in response to a command from the NC apparatus 90, and a Y-axis driving unit for moving the tool rest 3 along the Y-axis in response to a command from the NC apparatus 90. The tool rest 3 performs front machining on the workpiece W1 gripped by the front spindle 16 using the cutting tool 40 and/or the tool 60, and cuts the front-machined workpiece W1 gripped by both the front spindle 16 and the back spindle 21 using a cut-off tool. The cut-off tool may be attached to the cutting tool holder 31. The tool rest 3 performs back machining on the cut-off workpiece W1 gripped by the back spindle 21 using the cutting tool 40 and/or the tool 60. As a result, a product is formed from the workpiece W1.

Although not shown in the figures, the lathe 1 may include a tool rest other than the tool rest 3 shown in Fig. 1, such as a tool rest dedicated to back machining.

The cutting tool holder 31 includes the plurality of parallel cutting tool fixing grooves 33, to which the shanks 41 of the cutting tools 40 can be fixed, on the placement surface 31a, and includes the cutting tool holder main body 32 and the plurality of clamp pieces 35. The tool rest 3 including the cutting tool holder 31 may be said to be a gang-type tool rest. The cutting tool holder main body 32 includes the aforementioned plurality of cutting tool fixing grooves 33, and is attached to the tool rest main body 30 by a plurality of screws SC1. The cutting tool holder main body 32 includes screw insertion holes that are connected to a back surface 32b from the bottom surfaces 33a of the cutting tool fixing grooves 33 in alignment with the positions of the screws SC1. The tool rest main body 30 includes screw holes in alignment with the positions of the screw insertion holes. By screwing the screws SC1 into the aforementioned screw holes through the aforementioned screw insertion holes, the operator can attach the cutting tool holder main body 32 to the tool rest main body 30 with the back surface 32b facing the tool rest main body 30. The placement surface 31a of the cutting tool holder 31 is on the opposite side of the cutting tool holder main body 32 to the back surface 32b and may therefore be considered as the front surface of the cutting tool holder main body 32.

As shown in Figs. 2 and 3, the center line AX3 of the cutting tool fixing groove 33 extends along the X-axis. Here, the center line AX3 serves as a center position of the bottom surface 33a of the cutting tool fixing groove 33. The plurality of cutting tool fixing grooves 33 are arranged in the Y-axis direction. As shown in Figs. 3 and 4, each of the cutting tool fixing grooves 33 includes the bottom surface 33a, which is narrower than the opening 33o on a lateral section of the cutting tool fixing groove 33, the first inside surface 33b, which is orthogonal to the bottom surface 33a, and the second inside surface 33c on the opposite side to the first inside surface 33b. Here, the shape of the lateral section of the cutting tool fixing groove 33 corresponds to the shape of the cutting tool fixing groove 33 shown in Fig. 4. The first inside surface 33b contacts the shank 41 of the cutting tool 40 or the shaft part 50 of the tool holder 5. The second inside surface 33c has an inclined surface that become more distant from the first inside surface 33b with decreasing distance from the opening 33o, and contacts the wedge-shaped clamp piece 35.

As shown in Fig. 4, the clamp piece 35 includes the wedge 36, which is inserted into the cutting tool fixing groove 33. The wedge 36 is a wedge-shaped site of the clamp piece 35, which becomes narrower with decreasing distance from the bottom surface 33a of the cutting tool fixing groove 33. When the shank 41 of the cutting tool 40 is to be fixed to the cutting tool fixing groove 33, the clamp piece 35 fixes the shank 41 to the cutting tool fixing groove 33 by being attached to the cutting tool holder main body 32 by a plurality of screws SC2 in a state where the wedge 36 is inserted between the second inside surface 33c and the shank 41. In this state, the shank 41 is spaced from the second inside surface 33c and pressed against the first inside surface 33b by the clamp piece 35. As shown in Fig. 2, a cutting edge 42 of the cutting tool 40 is on the tip of the surface of the cutting tool 40 that contacts the clamp piece 35. When the shaft part 50 of the tool holder 5 is to be fixed to the cutting tool fixing groove 33, the clamp piece 35 fixes the shaft part 50 to the cutting tool fixing groove 33 by being attached to the cutting tool holder main body 32 by the plurality of screws SC2 in a state where the wedge 36 is inserted between the second inside surface 33c and the shaft part 50. The clamp piece 35 includes screw insertion holes 35a connected to the rear side from the front side in alignment with the positions of the screws SC2. The cutting tool holder main body 32 includes screw holes 32a in alignment with the positions of the screw insertion holes 35a. By screwing the screws SC2 into the screw holes 32a through the screw insertion holes 35a, the operator can attach the clamp piece 35 to the cutting tool holder main body 32 with the wedge 36 inserted into the cutting tool fixing groove 33.

Incidentally, when a rotary tool, a drilling tool, a tap, or the like cannot be attached to the cutting tool holder 31, the rotary tool or the like may be attached to a sleeve holder or a swiveling unit that is attached to the tool rest main body 30 separately from the cutting tool holder 31. However, attaching the sleeve holder or the swiveling unit to the tool rest main body 30 leads to an increase in the size of the tool rest 3 and also an increase in the cost of the tool rest 3.

Hence, in this specific example, by attaching the tool holder 5 holding at least one of a rotary tool or a non-rotary tool in which the machining axis AX4 extends along the spindle axis AX0 to the cutting tool holder 31 as the tool 60, an increase in the size of the tool rest 3 is suppressed, and an increase in the cost of the tool rest 3 is suppressed.

As shown in Figs. 2 to 5, the tool holder 5 includes the shaft part 50 that is fixed to the cutting tool fixing groove 33, the holding part 54 for detachably holding the tool 60 that performs machining about the machining axis AX4, and the connection part 53 that is connected to the holding part 54 from the shaft part 50. As shown in Fig. 3, the tool holder 5 and the cutting tool 40 can be attached to the cutting tool fixing groove 33 replaceably. This may be said of all of the cutting tool fixing grooves 33 shown in Fig. 2. Accordingly, it is possible to attach tool holders 5 to two or more of the plurality of cutting tool fixing grooves 33 provided in the cutting tool holder 31. Alternatively, two shaft parts 50 may be provided on one tool holder 5, and the two shaft parts 50 may be fixed to two of the cutting tool fixing grooves 33.

Furthermore, the holding part 54 of one tool holder 5 may detachably hold two or more tools 60. In other words, in one tool holder 5, the holding part 54 may detachably hold two or more rotary tools, may detachably hold two or more non-rotary tools in which the machining axis AX4 extends along the spindle axis AX0, and may simultaneously hold one or more rotary tools and one or more non-rotary tools in which the machining axis AX4 extends along the spindle axis AX0.

As shown in Figs. 4 and 5, the tool 60 held by the holding part 54 is a tool unit having a body 61 supporting a blade 62 that performs machining about the machining axis AX4. The tool 60 shown in Figs. 4 and 5 is a rotary drill unit that includes the body 61 supporting the blade 62 that is capable of rotating about the machining axis AX4. The body 61 is held by the holding part 54 and supports the blade 62, which is rotated by power from a drive source (not shown) such as an air source or an electric motor. Note that the tool 60 serving as the rotary tool is not limited to a rotary drill and may also be an endmill, a polygon cutter, and so on. The tool unit 5 holding the rotary tool is positioned on an adapter for attaching a tool unit having a milling function, such as an electric spindle or an air spindle. The machining axis AX4 of the rotary tool refers to the rotation center of the rotary tool. The tool 60 may also be a non-rotary tool in which the machining axis AX4 extends along the spindle axis AX0, such as a drilling tool, a tap, a boring bar, or a boring tool. The drilling tool may be a drill, a tap, or the like. The machining axis AX4 of the non-rotary tool refers to the rotation center of machining performed by rotating the workpiece W1 about the spindle axis AX0. The machining axis AX4 of the non-rotary tool may be aligned with the spindle axis AX0 or may deviate from the spindle axis AX0. For example, by rotating the tool rest 3 so as to move in alignment with the rotation of the workpiece W1 about the spindle axis AX0, eccentric machining, in which the machining axis AX4 deviates from the spindle axis AX0, can be performed.

As shown in Fig. 3, the shaft part 50 includes the first outside surface 51 that contacts the first inside surface 33b of the cutting tool fixing groove 33, and the second outside surface 52 on the opposite side to the first outside surface 51. The first outside surface 51 of the shaft part 50 fixed to the cutting tool fixing groove 33 is orthogonal to the bottom surface 33a of the cutting tool fixing groove 33. The second outside surface 52 is parallel to the first outside surface 51 and contacts the wedge 36 of the clamp piece 35. The clamp piece 35 fixes the shaft part 50 to the cutting tool fixing groove 33 by being attached to the cutting tool holder main body 32 in a state where the wedge 36 is inserted between the second inside surface 33c and the shaft part 50, In this state, the shaft part 50 is spaced from the second inside surface 33c and pressed against the first inside surface 33b by the clamp piece 35.

The holding part 54 shown in Figs. 4 and 5 includes a holding part main body 55 and a clamp ring 56. The holding part main body 55 includes a through hole 55h through which the tool 60 can be passed along the machining axis AX4. The clamp ring 56 is fixed to the outer periphery of the body 61 of the tool 60 by a screw SC3, and attached to the holding part main body 55 by a plurality of screws SC4. The operator can perform an operation to dispose the clamp ring 56 on the outer periphery of the body 61 so that the cutting edge (the tip end 63 of the blade 62) of the tool 60 is in a set position, then fix the clamp ring 56 with the screw SC3, then pass a rear part of the body 61 through the through hole 55h, and then attach the clamp ring 56 to the holding part main body 55 with the plurality of screws SC4. As a result, the tool 60 is held by the holding part 54 such that the tip end 63 is in a set position.

The holding part 54 shown in Figs. 2-5 holds the tool 60 such that the orientation of the machining axis AX4 is orthogonal to the placement surface 31a of the cutting tool holder 31, in which the plurality of cutting tool fixing grooves 33 are provided. Accordingly, the holding part 54 holds the tool 60 such that the machining axis AX4 thereof has a different orientation to the orientation of the center line AX3 of the cutting tool fixing groove 33. Note that the orientation of the machining axis AX4 of the tool 60 serving as the rotary tool is not limited to an orientation that is orthogonal to the center line AX3, and may be a different orientation from both the center line AX3 and the spindle axis AX0. In this case, machining centering on the machining axis AX4 having a different orientation to the orientation of the cutting tool fixing groove 33 can be performed on the workpiece W1, and as a result, the machining freedom of the workpiece W1 is improved. Alternatively, the orientation of the machining axis AX4 of the tool 60 serving as the rotary tool may extend along the center line AX3.

The orientation of the machining axis AX4 of the tool 60 serving as the non-rotary tool is set to extend along the spindle axis AX0. Similarly in this case, machining centering on the machining axis AX4 having an orientation that is orthogonal to the orientation of the cutting tool fixing groove 33 can be performed on the workpiece W1, and as a result, the machining freedom of the workpiece W1 is improved.

As shown in Fig. 5, the connection part 53 connected to the holding part 54 from the shaft part 50 positions the holding part 54 further away from the workpiece W1 prior to machining, which is gripped by the spindle 11 (see Fig. 1), than the intersecting position P1 that overlaps the extension part 34 of the cutting tool fixing groove 33 on the machining axis AX4. The connection part 53 shown in Fig. 5 has a substantially triangular plate shape in plan view, and the connection part 53 extends in the rightward direction D84 from the shaft part 50, which is integrated with an edge extending along the X-axis, and extends in the frontward direction D85 from the holding part main body 55, which is integrated with an edge extending along the Z-axis. Here, the rightward direction D84 may be considered as a direction heading away from the workpiece W1 prior to machining, which is gripped by the spindle 11, and the frontward direction D85 may be considered as a direction heading away from the spindle axis AX0.

When the orientation of the machining axis AX4 differs from the orientation of the center line AX3 of the cutting tool fixing groove 33, for example when the machining axis AX4 is orthogonal to the center line AX3 of the cutting tool fixing groove 33, a large moment acts on the tool holder 5 during machining of the workpiece W1 by the tool 60. The tool holder 5 according to this specific example includes the connection part 53 having a substantially triangular plate shape in plan view, and therefore exhibits high rigidity against a moment even when the orientation of the machining axis AX4 differs from the orientation of the center line AX3 of the cutting tool fixing groove 33. As a result, the workpiece W1 can be machined accurately.

As shown in Fig. 5, the holding part 54 holds the tool 60 such that the tip end 63 of the tool 60 is positioned closer than the holding part 54 to the workpiece W1 prior to machining, which is gripped by the spindle 11. As a result, the tip end 63 of the tool 60 is positioned close to the extension part 34 of the cutting tool fixing groove 33. The tip end 63 of the tool 60 is preferably positioned substantially in alignment with an intersection between an expanded surface of the placement surface 31a of the cutting tool holder 31, in which the plurality of cutting tool fixing grooves 33 are provided, and the machining axis AX4. Thus, the moment generated in the tool holder 5 during machining of the workpiece W1 by the tool 60 can be minimized, and as a result, the workpiece W1 can be machined accurately while realizing high rigidity in the tool holder 5.

Here, as shown in Fig. 4, the virtual plane PL1 is envisaged as extending along the placement surface 31a of the cutting tool holder 31, in which the plurality of cutting tool fixing grooves 33 are provided. As shown in Fig. 3, when the tool holder 5 attached to the cutting tool fixing groove 33 is projected onto the virtual plane PL1, the machining axis AX4 is positioned closer to the extension line 52a of the second outside surface 52 of the shaft part 50 than the extension line 51a of the first outside surface 51 of the shaft part 50. Hence, on the virtual plane PL1, the arrangement of the holding part 54 is biased toward the clamp piece 35 contacting the shaft part 50. Therefore, with the tool holder 5 according to this specific example, the space SP1 that forms the extension part 34 of the clamp piece 35 on the virtual plane PL1 can be used effectively.

The tool holder 5 having the holding part 54 structured as described above does not interfere with the cutting tool 40 fixed to the adjacent cutting tool fixing groove 33 of the cutting tool holder 31. Moreover, in view of design considerations such as changing the cutting tool pitch, it is possible to ensure that tool holders 5 do not interfere with each other even when fixed to a plurality of adjacent cutting tool fixing grooves 33. In this case, tool holders 5 can be fixed respectively to a plurality of adjacent cutting tool fixing grooves 33, and the workpiece W1 can be machined by the tool 60 held by the holding part 54 of each tool holder 5. As described above, with the tool rest 3 of this specific example, it is possible to perform various types of machining without reducing the number of tools that can be attached.

Moreover, the cutting tool holder 31 is designed such that the cutting tool 40 is fixed thereto with the cutting edge 42 of the cutting tool 40 substantially in alignment with the extension line 52a. Accordingly, the cutting tool holder 31 is designed such that the maximum rigidity is exhibited when the machining point of the workpiece W1 is substantially on the extension line 52a, whereby highly accurate machining is realized. On the virtual plane PL1, the machining axis AX4 is positioned close to the extension line 52a, and therefore the workpiece W1 can be machined accurately by the tool 60 while realizing high rigidity in the tool rest 3. Furthermore, the position of the machining point (the tip end 63) of the tool 60 can be substantially aligned with the position of the machining point (the cutting edge 42) of the cutting tool 40 fixed to the cutting tool fixing groove 33, and therefore the machining conditions can be set easily even when the component to be fixed to the cutting tool fixing groove 33 is changed from the cutting tool 40 to the tool holder 5 or from the tool holder 5 to the cutting tool 40.

When the tool rest 3 including the tool holder 5 described above is used in the lathe 1, the workpiece W1 can be machined by the tool 60 (the rotary tool or the non-rotary tool in which the machining axis AX4 extends along the spindle axis AX0) held by the tool holder 5 that is fixed to the cutting tool holder 31 in addition to the cutting tool 40 fixed to the cutting tool holder 31. As a result, the size of the tool rest 3 is suppressed, and an increase in the cost of the tool rest 3 is suppressed.

Further, when the shape of the product is complicated, machining of the workpiece W1 may be limited even after attaching a large number of tools to a sleeve holder or a swiveling unit. In this case, by causing the tool holder 5 fixed to the cutting tool holder 31 to hold the tool 60, a product having a complicated shape can be manufactured easily.

Hence, according to this specific example, the machining freedom of the workpiece can be improved while suppressing a cost increase.

### (4) Modified examples

Various modified examples may be applied to the present technology.

For example, the machine tool to which the present technology can be applied is not limited to a lathe and may be a machining center or the like.

The lathe 1 may be a spindle-fixed lathe in which the front spindle 16 does not move in the Z-axis direction. In this case, the present technology is applied by moving the tool rest 3 in the Z-axis direction as well as the X-axis direction and the Y-axis direction.

The spindle 11 that grips the workpiece W1 is not limited to the front spindle 16 and may be the back spindle 21.

### (5) Conclusion

According to the present invention, as described above, it is possible, by means of various aspects, to provide technology with which the machining freedom of a workpiece is improved while suppressing a cost increase, and so on. Needless to mention, the basic actions and effects described above are likewise obtained with technology constituted only by the constituent features pertaining to the independent claims.

Moreover, configurations obtained by replacing the configurations disclosed in the above examples with each other or changing the combinations thereof, configurations obtained by replacing the configurations disclosed in the prior art and the above examples with each other or changing the combinations thereof, and so on may also be implemented. The present invention also includes these configurations and so on.

### [Reference Signs List]

- 1: Lathe (example of machine tool)
- 3: Tool rest (example of tool rest for machine tool)
- 5: Tool holder
- 10: Headstock
- 11: Spindle
- 12: Gripping unit
- 13: Headstock driving unit
- 14: Guide bush
- 15: Front headstock
- 16: Front spindle
- 20: Back headstock
- 21: Back spindle
- 27: Tool rest driving unit
- 30: Tool rest main body
- 31: Cutting tool holder
- 31a: Placement surface
- 32: Cutting tool holder main body
- 32a: Screw hole
- 32b: Back surface
- 33: Cutting tool fixing groove
- 33a: Bottom surface
- 33b: First inside surface
- 33c: Second inside surface
- 33o: Opening
- 34: Extension part
- 35: Clamp piece
- 35a: Screw insertion hole
- 36: Wedge
- 40: Cutting tool
- 41: Shank
- 42: Cutting edge
- 50: Shaft part
- 51: First outside surface
- 51a: Extension line
- 52: Second outside surface
- 52a: Extension line
- 53: Connection part
- 54: Holding part
- 55: Holding part main body
- 55h: Through hole
- 56: Clamp ring
- 60: Tool
- 61: Body
- 62: Blade
- 63: Tip end
- AX0: Spindle axis
- AX3: Center line of cutting tool fixing groove
- AX4: Machining axis
- P1: Intersecting position
- PL1: Virtual plane
- SP1: Space
- W1: Workpiece

## Claims

1. A tool holder that is used in a machine tool including a cutting tool holder having a plurality of parallel cutting tool fixing grooves to which a shank of a cutting tool can be fixed, and that holds a tool for machining a workpiece gripped by a spindle that is capable of rotating about a spindle axis, the tool holder comprising:
a shaft part that is fixed to the cutting tool fixing groove; and
a holding part that holds, as the tool that performs machining about a machining axis, at least one of a rotary tool and a non-rotary tool in which the machining axis extends along the spindle axis.

2. The tool holder according to claim 1, wherein the holding part holds the tool such that the machining axis has a different orientation to the orientation of the cutting tool fixing groove.

3. The tool holder according to claim 2, further comprising a connection part that is connected to the holding part from the shaft part and positions the holding part further away from the workpiece prior to machining, which is gripped by the spindle, than a position overlapping an extension part of the cutting tool fixing groove on the machining axis, wherein the holding part holds the tool so that a tip end of the tool is closer than the holding part to the workpiece prior to machining, which is gripped by the spindle.

4. The tool holder according to claim 2 or 3, wherein the orientation of the machining axis is orthogonal to a placement surface of the cutting tool holder, in which the plurality of cutting tool fixing grooves are provided,
the cutting tool fixing groove includes a bottom surface that is narrower than an opening on a lateral section of the cutting tool fixing groove, a first inside surface that contacts the shaft part, and a second inside surface on the opposite side to the first inside surface,
the cutting tool holder includes a cutting tool holder main body that includes the plurality of cutting tool fixing grooves, and a clamp piece that fixes the shaft part to the cutting tool fixing groove by being attached to the cutting tool holder main body in a state where a part thereof is inserted between the second inside surface and the shaft part,
the shaft part includes a first outside surface that contacts the first inside surface, and a second outside surface on the opposite side to the first outside surface, and
when the tool holder attached to the cutting tool fixing groove is projected onto a virtual plane extending along the placement surface, the machining axis is positioned closer to an extension line of the second outside surface than an extension line of the first outside surface.

5. A tool rest for a machine tool, the tool rest comprising: a cutting tool holder having a plurality of parallel cutting tool fixing grooves to which a shank of a cutting tool can be fixed, and
a tool holder that holds a tool for machining a workpiece gripped by a spindle that is capable of rotating about a spindle axis,
the tool holder comprising:
a shaft part that is fixed to the cutting tool fixing groove; and
a holding part that holds, as the tool that performs machining about a machining axis, at least one of a rotary tool and a non-rotary tool in which the machining axis extends along the spindle axis.
